(19) **Europäisches Patentamt / European Patent Office / Office européen des brevets**

(11) **EP 4 440 998 B1**

(12) **EUROPEAN PATENT SPECIFICATION**

(45) Date of publication and mention
of the grant of the patent:
**10.09.2025 Bulletin 2025/37**

(21) Application number: **22823518.0**

(22) Date of filing: **30.11.2022**

(51) International Patent Classification (IPC):
**C03B 3/02** *(2006.01)*    **C03B 5/03** *(2006.01)*
**C03B 5/225** *(2006.01)*    **C03B 5/235** *(2006.01)*
**C03B 5/237** *(2006.01)*    **C03C 1/00** *(2006.01)*
**F23J 15/02** *(2006.01)*    **F27D 17/00** *(2025.01)*
**F23D 99/00** *(2010.01)*

(52) Cooperative Patent Classification (CPC):
**C03B 5/03; C03B 3/023; C03B 5/225;**
**C03B 5/2353; C03B 5/237; C03C 1/002;**
**F23D 99/004; F23J 15/02;** C03B 2211/40;
F23C 2900/9901; F23J 2215/50; Y02P 40/50

(86) International application number:
**PCT/EP2022/083947**

(87) International publication number:
**WO 2023/099617 (08.06.2023 Gazette 2023/23)**

(54) **GLASS MELTING PROCESS WITH VERY LOW TO ZERO-CO2 EMISSION**

GLASSCHMELZVERFAHREN MIT SEHR GERINGEN BIS KEINEN CO2-EMISSIONEN

PROCÉDÉ DE FUSION DE VERRE AVEC DES ÉMISSIONS DE CO2 TRÈS FAIBLES À NULLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **03.12.2021 EP 21212202**

(43) Date of publication of application:
**09.10.2024 Bulletin 2024/41**

(73) Proprietor: **AGC Glass Europe
1348 Louvain-La-Neuve (BE)**

(72) Inventors:
• **BIOUL, François
1360 Thorembais-Saint-Trond (BE)**
• **SYMOENS, Bruno
5140 Sombreffe (BE)**

• **BOURGEOIS, Nicolas
6041 Gosselies (BE)**
• **HABIBI, Zakaria
1420 Braine l'Alleud (BE)**
• **FASILOW, Fabrice
6041 Gosselies (BE)**

(74) Representative: **AGC Glass Europe
Technovation Centre
Intellectual Property Department
Rue Louis Blériot 12
6041 Gosselies (BE)**

(56) References cited:
EP-A2- 0 761 287      US-A1- 2014 230 491
US-A1- 2020 331 789

**Description**

**FIELD OF THE INVENTION**

The present invention relates to a glass melting process aimed at continuously supplying molten glass to flat glass forming installations such as float or rolling installations. In particular, the present invention relates to a glass melting process that provides a lot of advantages, especially in terms of $CO_2$, especially its emissions and capture.

The invention is more particularly related, but not limited, to melting process for flat glass involving large production capacities, i.e. up to 1000 tons/day or more.

**BACKGROUND OF THE INVENTION**

The global warming and the requirements for $CO_2$ emissions reduction increase the pressure on glass manufacturers, as well as the energy prices and $CO_2$ taxes that could become soon a severe threat on competitiveness in the glass sector.

In that context of urgent action to reduce carbon emissions, the glass industry has invested a lot since years in the decarbonization of its manufacturing processes, with the view to produce glass goods that are fit for a sustainable, resource-efficient, low-carbon society.

For enabling the transition, the glass sector has already identified a number of solutions/technologies to approach that ambitious goal, as, for example, use of electricity as energy source, use of alternative and greener sources of energy like $H_2$ or biogas, use of alternative raw materials, increase use of cullet as raw materials, heat recovery, $CO_2$ capture utilization and storage (or CCUS),...

Nevertheless, all these technologies are either accompanied by severe drawbacks or issues to practical implementation or are not viable from an economical point of view. There is therefore still an urgent need to have a glass melting process that allows to decrease drastically the amount of $CO_2$ emitted but while staying economically acceptable for glass manufacturers.

*As to the use of electricity* as source of energy: it is known that furnace using electrical energy to melt the glass raw materials show a decrease of $CO_2$ emissions but also a decrease of total energy consumption. In such a configuration, the melting furnace comprises electrodes, immersed and commonly located at the bottom of the tank, that allow an electric current/power to pass through and heat the bath of molten glass from its bulk. However, glass melting furnaces where the heating power is entirely supplied by electricity have not been adopted in the flat glass art when a high-quality glass is required, due to serious temperature and glass convection/flow issues.

Hence, conventional glass melting furnaces for flat glass are generally only "boosted" with electricity, in a so-called "hybrid" configuration combining combustion heating means, namely burners, and electrical heating means, namely immersed electrodes. In such known "electro-boosted combustion furnaces", the electrical input fraction is nevertheless limited to maximum 10-15% of the total energy input, preventing to fully benefit from the advantages in terms of energy consumption of electrical melting.

More recently, a new specific furnace design, described in European patent application EP21200998.9 allows to reach significantly higher electrical input fraction, i.e. above 50%, in an "hybrid" furnace.

*As to the use of alternative and greener sources of energy like hydrogen $H_2$ or biogas:* even if it is clear that they will bring advantages in term of environment/energy consumption/$CO_2$ emissions, serious limitations prevents their extensive use in the glass industry (lack of availability of biogas, and expensiveness of $H_2$ that makes it a non-economically viable solution so far as the only source of energy to melt glass raw materials).

*As to heat recovery :* Waste heat recovery from flue gas is already extensively applied in the glass industry to preheat the combustion air entering the furnace at temperatures higher than 1000°C, or gas and oxygen ("Hotox") at temperatures higher than 400 and 500°C respectively. Next to that, waste heat from flue gas can also be used to preheat the vitrifiable materials, especially cullet. Nevertheless, it is known that pre-heating raw materials/cullet cannot be coupled with electrical melting as the temperature of flue gas released by raw materials in this case is too low.

*As to the use of $CO_2$ capture:* Generally, a $CO_2$ capture process in industrial processes/plants consists of two steps: (i) separation of $CO_2$ from an effluent gas mixture through a selective reaction with a separation material ("absorption" of $CO_2$) and (ii) regeneration of the material used by a reverse reaction ("desorption" of $CO_2$). The separation material can be re-used for $CO_2$ capture by sequentially repeating steps (i) and (ii). Amines, in the form of solvents or membranes or porous sorbents, are the most widely used material in $CO_2$ capture process in industry so far, as the technology is mature and an effective separation of amine and $CO_2$ via a reversible reaction is possible. Nevertheless, such an amine process (e.g., using aqueous MEA) remains a poor option, in particular in the specific context of glass industry so far, at least for the main reasons that :

- the combustion gas/flue gas in known glass manufacturing processes shows a low concentration in $CO_2$ (generally,

below 30% and often around 10-20% in volume) and a low purity due to the presence of a lot of other components (mainly $N_2$, $H_2O$, $O_2$, $NO_x$, $SO_x$, etc), thereby affecting greatly the efficiency of the $CO_2$ capture process; and

- the amine-$CO_2$ capture process requires a lot of energy in order to regenerate the amine sorbent (desorption process), thereby affecting the total energy consumption (and potentially the $CO_2$ emission depending of the energy source used, which is obviously counter-productive in present context).

Moreover, known glass manufacturing processes generate very high volumes or flow rates of flue gas, which also directly impacts, whatever the used methods the investment and operational costs when one wants to capture $CO_2$ from those flue gas.

US2020331789 A1 discloses a process for sheet glass production, whereby the batch including cullet is melted in a furnace that is exclusively heated electrically, followed by fining and glass sheet drawing. EP0761287 A2 teaches the capture of CO2 from waste gases originating from a glass melting furnace by dehydration. The raw materials are pre-heated by recovering heat from the furnace.

US2014230491 A1 provides a corresponding teaching to US2020331789 A1, whereby the electric heating is supported by oxy-fuel burners in the melting tank (not in the fining tank).

## OBJECTIVE OF THE INVENTION

It is an objective of the present invention to overcome the disadvantages described above with respect to the state of the art and resolving the technical problem, i.e. by providing a glass melting process to produce flat glass, showing a decreased global energy consumption and a decreased $CO_2$ emissions compared to a classical melting furnace.

It is a further objective of the present invention to provide a glass melting process to produce flat glass, showing a decreased global energy consumption and a decreased $CO_2$ emissions compared to a classical melting furnace, that is economically viable.

It is a further objective of the present invention to provide a glass melting process to produce flat glass, showing a decreased global energy consumption and a decreased $CO_2$ emissions compared to a classical melting furnace, while allowing a simple and cost-effective $CO_2$ capture.

## DESCRIPTION OF THE INVENTION

The present invention relates to a process for melting vitrifiable materials to produce flat glass, comprising the steps of :

- providing a furnace comprising (i) at least one melting tank comprising electrical heating means, (ii) a fining tank provided with oxy-combustion heating means, (iii) at least one neck separating the at least one melting tank and the fining tank, (iv) inlet mean(s) located at the at least one melting tank and (v) outlet mean(s) located downstream of the fining tank;
- charging the vitrifiable materials comprising raw materials and cullet in the at least one melting tank with the inlet mean(s), the amount of cullet being at least 10% in weight of the total amount of vitrifiable materials;
- cullet pre-heating, at least partially by recovering heat from the furnace, before charging said cullet in the at least one melting tank;
- melting the vitrifiable materials in the at least one melting tank by heating with the electrical heating means;
- fining the melt in the fining tank by heating with the oxy-combustion heating means alimented with gas and/or hydrogen;
- flowing the melt from the fining tank to a working zone trough the outlet mean(s);
- capturing $CO_2$ from flue gas, said flue gas having a $CO_2$ concentration of at least 35%;

with its electrical input fraction ranging from 50% to 85% and with the step of capturing $CO_2$ from flue gas comprising step(s) of compression and/or dehydration.

Hence, the invention is based on a novel and inventive approach. In particular, the inventors have found that by combining, in a glass melting process to produce flat glass:

- the use of a furnace with a specific segmented design (separating an electrically-heated melting zone and a combustion-heated fining zone),
- the use of oxygen as comburant,
- the use of gas and/or hydrogen as combustible,
- the use of a minimum amount of cullet in the vitrifiable materials,
- the use of a step of cullet pre-heating, and

3

- the use of a specific electrical input fraction,

it is possible to obtain, at the same time :

- a significant decrease of the total energy consumption; and
- a significant decrease of the total $CO_2$ production; and
- a significant decrease of the volume of flue gas as well as a significant increase of the $CO_2$ concentration in said flue gas and its purity, thereby allowing to use a simple, efficient and cost-effective $CO_2$ capture process.

By implementing all the features of the invention, the process of the invention shows a very low $CO_2$ fingerprint and is economically viable.

In present specification and claims, it is well understood by the person skilled in the art that, as used herein the terms "a", "an" or "the" means "at least one" and should not be limited to "only one" unless explicitly indicated to the contrary. Also, when a range is indicated, the extremities are included. In addition, all the integral and subdomain values in the numerical range are expressly included as if explicitly written. Finally, the terms "upstream" and "downstream" refer to the flow direction of the glass and are to be understood with their common sense, namely as meaning along the averaged moving direction of the vitrifiable materials/the glass melt, from the inlet mean(s) to the outlet mean(s). The expression "upstream part" is understood to mean the first upstream third of the length, said length being located along the horizontal and longitudinal axis of the furnace. The expression "downstream part" is understood to mean the last downstream third of said length.

Other features and advantages of the invention will be made clearer from reading the following description of preferred embodiments and figure, given by way of simple illustrative and non-restrictive examples.

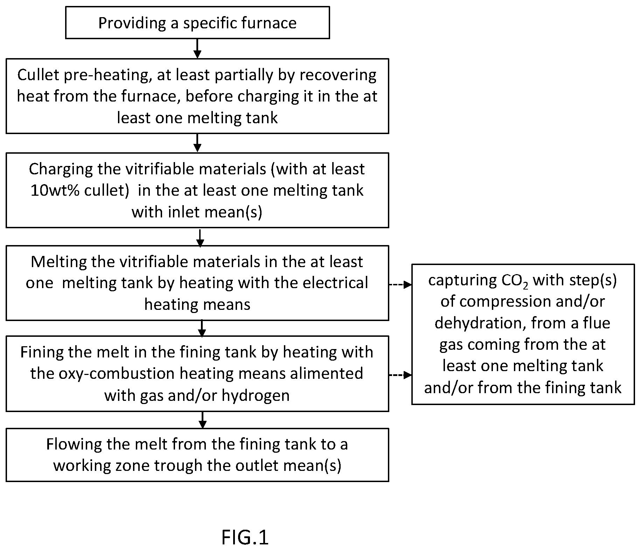

FIG. 1 is a flowchart of an embodiment of the process of the invention.

According to the invention and as illustrated at FIG.1, the process for melting vitrifiable materials to produce flat glass comprises a step of providing a furnace comprising (i) at least one melting tank comprising electrical heating means, (ii) a fining tank provided with oxy-combustion heating means, (iii) at least one neck separating the at least one melting tank and the fining tank, (iv) inlet mean(s) located at the at least one melting tank and (v) outlet mean(s) located downstream of the fining tank (for the melted glass to flow to a working zone).

According to the invention and as commonly adopted in the glass art, by "melting tank", it is meant a tank defining a zone where the vitrifiable materials (raw materials and/or cullet) are charged and melt by heating, and comprising, when the furnace is in process, a melt and a "blanket" of unmelted vitrifiable materials that floats on the melt and is progressively melted

According to the invention and as commonly adopted in the glass art, by "fining tank", it is meant a tank defining a zone where there is no more "blanket" of unmelted vitrifiable materials that floats on the melt and where the glass melt is heated at temperatures higher than melting tank temperatures (generally above 1400°C or even above 1450°C), in order to refine the glass (mainly by eliminating major part of bubbles). This fining tank is also commonly called "clarification tank" in the art.

According to the invention, by a "neck" separating the melting tank and the fining tank, it is meant a narrowing in width (or in a direction perpendicular to the glass moving direction) of the melting tank. The opening of the neck according to the invention may be completely under the glass melt/blanket free surface (then also commonly named in the art as a "throat") or partially under the glass melt/blanket free surface (then leaving a free opening above the glass). Preferably, the opening of the neck is partially under the glass melt free surface, thereby allowing the existence of a surface glass backward flow going from the fining tank towards the melting tank. This is advantageous because firstly it stabilizes the blanket of raw materials and avoid unmelted particles flowing directly towards the fining tank, and secondly it also avoids that potential defects generated at the contact between glass, refractory and atmosphere would flow directly to the fining tank. These points can advantageously improve glass quality. Moreover, it also allows wider opening and therefore lower glass velocities leading to lower refractory corrosion and wear. This point can advantageously improve furnace lifetime.

This furnace design, with a segmentation of the melting and fining tanks, brings a lot of advantages in favour of energy consumption/$CO_2$ emissions and in favour of mechanical stability/ lifetime of the furnace. In particular, advantageously in the context of present invention, this furnace with its specific segmented design allows to deal with flue gas from melting tank(s) and flue gas from fining tank independently, if desired.

The invention of a segmented glass furnace described in European patent application EP21200998.9 is referred to herewith.

According to a particular embodiment, the furnace of the invention is defined by the following:

$$0.1*W2 \leq W3i \leq 0.6*W2;$$

$$W1i \geq 1.4 * W3i;$$

W1i being the width of the at least one melting tank;
W2 being the width of the fining tank;
W3i being the width of the at least one neck.

This last specific design is advantageous to find a good compromise between two opposite requirements : from one side, the neck(s) between the melting zone(s) and the fining zone should be ideally as narrow as possible in order to (1) decrease the opening between melting and fining superstructures/crowns and (2) generate an obstacle to global glass melt convection strength in the melting tank(s), and, from the other side, the neck should be ideally as wide as possible in order to limit glass velocity inside the neck(s), to limit neck refractory wall wear/corrosion.

According to the invention, the furnace may comprise one melting tank and one neck; or two melting tanks and two necks; or even three melting tanks and three necks. Embodiments of these specific designs are extensively described in European patent application EP21200998.9.

For example, in a "two-melting tanks" configuration, the furnace may comprise :

(i) a first melting tank,
(ii) a second melting tank;
(iii) a fining tank,
(iv) a neck Ni separating first melting tank and the fining tank;
(v) a neck Nii separating second melting tank and the fining tank;
(vi) at least one inlet mean located at the first melting tank;
(vii) at least one inlet mean located at the second melting tank;
(viii) at least one outlet mean located at the fining tank.

According to this specific embodiment, the furnace may be advantageously defined by the following:

$$0.1 * W2 \leq W3i \leq 0.6 * W2;$$

$$0.1 * W2 \leq W3ii \leq 0.6 * W2;$$

$$W1i \geq 1.4 * W3i;$$

$$W1ii \geq 1.4 * W3ii;$$

W1i being the width of first melting tank;
W1ii being the width of second melting tank;
W2 being the width of the fining tank;
W3i being the width of neck Ni;
W3ii being the width of neck Nii.

Preferably, the total surface area of the melting tank(s) ranges from 25 to 400 m2. Preferably also, according to the invention, the surface area of the fining tank ranges from 25 to 400 m2.

According to the invention and as illustrated at FIG.1, the process for melting vitrifiable materials to produce flat glass comprises a step of charging the vitrifiable materials comprising raw materials and cullet in the at least one melting tank with the inlet mean(s).

According to the invention, as the vitrifiable materials comprise raw materials and cullet, both are preferably charged together in the at least one melting tank, i.e. through same inlet mean(s). Alternatively, both are charged in the at least one melting tank independently, through different inlet mean(s) (for example, one inlet mean for the raw materials and one inlet mean for the cullet, or two inlet means for the raw materials and two inlet means for the cullet).

According to the invention, the amount of cullet is at least 10% in weight of the total amount of vitrifiable materials. Preferably, the amount of cullet is at least 20% in weight of the total amount of vitrifiable materials. More preferably, the amount of cullet is at least 30% in weight of the total amount of vitrifiable materials, or even, very preferred, at least 40% in weight. This is advantageous as it allows to reduce the $CO_2$ production/emission of the process of the invention (due to a reducing of the emission occurring from the decarbonization of the carbonate raw materials). Preferably also, the amount of cullet is at maximum 90% in weight of the total amount of vitrifiable materials, or even at maximum 80% in weight. More preferably, the amount of cullet is at maximum 70% in weight of the total amount of vitrifiable materials, or even at maximum 60% in weight.

Preferably, and as known in the art, the inlet mean(s) is/are either located upstream of the at least one melting tank (either in the width of said tank or laterally in its length) or located at the top of the at least one melting tank ("top batch charger").

In an advantageous embodiment of the invention, the furnace comprises at least one melting tank enlarged laterally and equipped with at least two inlet means, located on both sides of the melting tank based on the location of the neck, either at the lateral sides or as top batch chargers.

According to the invention and as illustrated at FIG.1, the process comprises a step of cullet pre-heating, at least partially by recovering heat from the furnace, before charging said cullet in the at least one melting tank.

According to an embodiment, recovering heat from the furnace may be carried out from flue gas coming from (i) the melting tank(s), or (ii) the fining tank or (iii) from the whole furnace (thereby including flue gas from the melting and fining tanks).

Advantageously, according to the invention, the $CO_2$ capturing step may be carried out from flue gas that is used for recovering heat at the step of cullet pre-heating.

According to an embodiment, the raw materials are charged in the at least one melting tank together with the pre-heated cullet, through same inlet mean(s) (this implies therefore that both type of vitrifiable materials are mixed before charging). Alternatively, the raw materials are charged in the at least one melting tank independently of the pre-heated cullet, through different inlet mean(s).

Preferably, the maximum temperature of the cullet at the step of cullet pre-heating is 450°C. This allows to avoid clogging issues.

According to the invention, the step of cullet pre-heating may be carried out in at least one cullet pre-heater, for example, of the type of one of those described in US5526580 or DE3716687.

Advantageously, the at least one cullet pre-heater may be located at upstream part of the at least one melting tank, either in the width of said tank or laterally in its length. Advantageously, the step of cullet pre-heating may be carried out in at least two cullet pre-heaters located, for example, at upstream part of the at least one melting tank, in its width or laterally in its length on both sides. For example, the step of cullet pre-heating may be carried out in four cullet pre-heaters located at upstream part of the at least one melting tank, distributed in its width or laterally in its length (for example, two on each side). For example also, the step of cullet pre-heating may be carried out in six cullet pre-heaters located at upstream part of the at least one melting tank, in its width or laterally in its length (for example, three on each side), or also in eight cullet pre-heaters located at upstream part of the at least one melting tank, in its width or laterally in its length (for example, four on each side).

According to the invention and as illustrated at FIG.1, the process for melting vitrifiable materials to produce flat glass comprises a step of melting the vitrifiable materials in the at least one melting tank by heating with the electrical heating means.

Electrical heating means according to the invention are preferably located at the bottom of the at least one melting tank and preferably, also, composed of immersed electrodes. The electrodes are advantageously arranged in grid pattern (checkerboard) multiple of 3 or 2, in order to facilitate connection to transformers and electric current balance. For example, the number of electrodes is designed in order to limit maximum power for each electrode to 200kW, by respecting a maximum current density of $1.5A/cm^2$ at the electrode surface. For example also, immersed electrodes height is between 0.3 and 0.8 times glass melt height.

According to the invention, the electrical input fraction ranges from 50% to 85%. By "electrical input fraction" according to the invention, it is meant the part of electricity in the total energy input of the process/furnace for the melting/fining, namely electricity/(fuel+electricity), the total energy input being that of the process/furnace in standard/-normal production mode, i.e. at its standard pull range (excluding periods of start-up, maintenance, hot repair, culleting,...).

According to the invention and as illustrated at FIG.1, the process for melting vitrifiable materials to produce flat glass comprises a step of fining the melt in the fining tank by heating with the oxy-combustion heating means alimented with gas and/or hydrogen. The term "gas" herein includes, but not only, natural gas, synthetic gas and biogas. Natural glass is the most widely used presently for practical, economical and availability reasons.

By "oxy-combustion means" according to the invention, it is meant combustion means supplied with gaseous oxygen ($O_2$) as comburant. Generally, $O_2$ gas comburant supplied to glass melting furnaces is at least 90% purity, or even at least 95% purity. An advantage of using gaseous oxygen as comburant, compared to using air, is the drastic decrease of the so-called corrosive « NOx » pollutants appearing during the combustion. Even if they could still be present in the flue gas (depending on the $O_2$ purity and amount of parasitic air), it will be in very low amounts.

Oxy-combustion heating means according to the invention may be composed of burners, advantageously arranged along the side walls of said tank on each side thereof to spread the flames over practically the entire width of the tank. The burners may be spaced from one another in order to distribute the energy supply over a portion (i.e. ~50% of the length) of the fining tank. They are also commonly arranged in rows on either side of the tank.

According to the invention, the oxy-combustion heating means are alimented with gas and/or hydrogen. In an embodiment, the oxy-combustion heating means are alimented with at least 50% hydrogen and preferably, at least 80% hydrogen. More preferably, the oxy-combustion heating means are alimented with 100% hydrogen. This is advantageous as it allows to decrease drastically to global $CO_2$ emission of the process. In an alternative, the oxy-combustion heating means are alimented with more than 50% gas and preferably, at least 80% gas, or even at least 100% gas. This is advantageous as it allows to reach a higher concentration of $CO_2$ in the flue gas, thereby facilitating and improving the $CO_2$ capture step, but also to limit impact on the chemistry of glass and on furnace refractory materials. In a specific and advantageous embodiment of the invention, the oxy-combustion heating means are alimented with 50% gas and 50% hydrogen.

According to the invention and as illustrated at FIG.1, the process for melting vitrifiable materials to produce flat glass comprises a step of flowing the melt from the fining tank to a working zone trough the outlet mean(s).

According to the invention, the outlet mean(s) is/are located downstream of the fining tank, for the melted glass to reach a working zone. According to an embodiment, the outlet mean(s) is/are composed usually of a neck, in order to lead the melt towards a working zone commonly called "working end". Alternatively, the outlet mean(s) is/are composed of a throat, in order to lead the melt towards a working zone including, for example, fore heart(s). The working zone according to the invention may comprise, for example, a conditioning zone in which thermal conditioning by controlled cooling is carried out prior to glass melt leaving said zone through an outlet to a forming zone. Such a forming zone may comprise, for example, a float installation and/or a rolling installation.

According to the invention and as illustrated at FIG.1, the process for melting vitrifiable materials to produce flat glass comprises a step of capturing $CO_2$ from flue gas.

According to the invention, said flue gas (namely the flue gas which undergoes the step of $CO_2$ capture) has a $CO_2$ concentration of at least 35%. The $CO_2$ concentration according to the invention is the concentration defined for the dry flue gas, namely the flue gas with all its components except the water ($H_2O$). Preferably, the flue gas in the invention has a $CO_2$ concentration of at least 40%, and more preferably, of at least 50%, or even more of at least 60%. This is advantageous as the higher the concentration in $CO_2$ of the flue gas, the easier and effective the $CO_2$ capture applied on this flue gas.

According to the invention and as illustrated at FIG.1, the step of capturing $CO_2$ from flue gas comprises step(s) of compression and/or dehydration. The step of dehydration corresponds to a step of water condensation and/or drying of the flue gas. The step of compression corresponds to increasing the pressure of $CO_2$, commonly by using a compressor. The step of dehydration may be prior to the step of compression, and/or the step of dehydration may be concomitant to the step of compression.

In particular, the step of capturing $CO_2$ from flue gas according to the invention may carried out, in a known manner, using a $CO_2$ compression and purification unit (or CPU).

The flue gas according to this invention, as illustrated at FIG.1, may be recovered for $CO_2$ capture either from the at least one melting tank, or from the fining tank or from both. In particular, if the oxy-combustion heating means according to the invention are alimented with hydrogen only, the flue gas are advantageously recovered only from the at least one melting tank (the flue gas evolving from the fining tank does not include $CO_2$).

After the step of capturing $CO_2$ according to the invention, the $CO_2$ product has, for example, a pressure of about 35 bar at temperature 5°C-40°C, in a gaseous form, appropriate for transport through pipelines, or of about 100 bar in the liquid form, appropriate for transport through pipelines but also truck or rail transport. For transport by truck, a value of 15barg at -35°C is also known as appropriate.

This simple and effective $CO_2$ capture process is very advantageous as it allows avoiding the use of any sorbent/chemical reagents that would contribute to operating/energy costs and environmental issues, and as it allows to reach a $CO_2$ capture that is cost-effective, rendering the whole process of the invention economically viable.

According to a preferred embodiment, the step of capturing $CO_2$ from flue gas consists essentially in step(s) of compression and/or dehydration.

According to an advantageous embodiment, the process of the invention comprises further a step of eliminating acidic components from flue gas. This step of eliminating acidic components is carried out prior or concurrent to the step of capturing $CO_2$ (for example prior to or concurrent to/together with the step(s) of compression and/or dehydration).

The step of eliminating acidic components may include a step of desulphurization (or removing of the so-called « SOx » compounds) of the flue gas. It may also include a step of removing the so-called « NOx » compounds, that could still be present even if in very low amounts due to the use of oxygen as comburant. This is advantageous as this allows removing the corrosive compounds (SOx, NOx) before the transportation, storage and/or utilization.

After the step of capturing $CO_2$ according to the invention, in a known manner, the $CO_2$ product (for example, in a liquid form) may be transported to its final destination through pipelines, then either stored/sequestrated (for example, deep undersea or in a geological formation such as a saline aquifer) or, alternatively, utilized (for example, for enhanced oil recovery, or for food/beverage applications or for fire protection applications). Advantageously, the $CO_2$ product obtained after the step of capturing $CO_2$ may be used locally, to limit transportation. This can be considered if the amount of $CO_2$

captured is not too high so that it can be absorbed by local market(s).

According to another advantageous embodiment of the invention, the process comprises further a step of pre-melting at least a part of the cullet in an auxiliary melting tank and flowing the pre-melted cullet to the at least one melting tank (then called the "main melting tank"). According to this embodiment, the part of the cullet to be pre-melted is charged in the auxiliary melting tank and the remaining part of the cullet, if any, is charged in the at least one main melting tank. This embodiment has the advantage to prevent from lack of availability of good quality cullet as it allows, in the process of the invention, to use cullet of poorer quality or polluted cullet. Indeed, in this embodiment, the at least part of the cullet is "digested" beforehand in the auxiliary melting tank. For example, metallic compounds present in the cullet can be eliminated in this auxiliary melting tank, by using reductants (like coke or anthracite) to produce molten metal that will separate from the glass melt by decanting at the bottom of the auxiliary melting tank, while the obtained "purified" glass melt could flow from the top towards the main melting tank(s).

According to this embodiment, the auxiliary melting tank is connected preferably at the upstream part of the at least one main melting tank, and more preferably, as upstream as possible of the at least one main melting tank.

Also according to this embodiment of the invention, only a part of the cullet is pre-melted in the auxiliary melting tank. For example, the part of the cullet that is considered as "polluted" or not sufficiently clean is pre-melted in the auxiliary melting tank and the remaining "clean" part of the cullet is charged in the at least one main melting tank. Alternatively, the total amount of the cullet is pre-melted in the auxiliary melting tank.

According to this embodiment of the invention, preferably, the process comprises a step of pre-heating the at least a part of the cullet, at least partially by recovering heat from the furnace, before charging it in the auxiliary melting tank.

One example of an auxiliary melting tank, suitable in present embodiment, is described in patent application EP2137115A1.

According to still another advantageous embodiment of the invention, the raw materials comprise less than 25% in weight of carbonate compounds. By "carbonate compounds", it is meant for example alkali carbonates and alkaline earth carbonates. Preferably, the raw materials comprise less than 20% in weight of carbonate compounds, and more preferably less than 10%, and even less than 5%. The raw materials may be advantageously free of any carbonate compound.

This embodiment is advantageous as it allows to reduce the part of $CO_2$ emission occurring from the decarbonization of raw materials, compared to classical glass meting process where sodium carbonate $Na_2CO_3$, limestone $CaCO_3$ and dolomite $CaMg(CO_3)_2$ are generally essentially used as sources of sodium and calcium. According to this embodiment, the alkali and alkaline earth sources may advantageously be present, at least partially, in the form of oxides or hydroxides such as CaO, CaO.MgO (dolime), $Ca(OH)_2$, $Mg(OH)_2$, NaOH, KOH.

According to a very preferred embodiment of the invention, the process for melting vitrifiable materials to produce flat glass comprises the steps of :

- providing a furnace comprising (i) at least one main melting tank comprising electrical heating means, (ii) an auxiliary melting tank, (iii) a fining tank provided with oxy-combustion heating means, (iv) at least one neck separating the at least one main melting tank and the fining tank, (v) inlet mean(s) located at the at least one main melting tank, (vi) outlet mean(s) located downstream of the fining tank;
- charging the vitrifiable materials in the at least one main melting tank with the inlet mean(s) and/or in the auxiliary melting tank, said vitrifiable materials comprising (i) raw materials with less than 25% in weight of carbonate compounds and (ii) cullet in an amount of at least 10% in weight of the total amount of vitrifiable materials,
- cullet pre-heating, at least partially by recovering heat from the furnace, before charging said cullet in the at least one main melting tank and/or the auxiliary melting tank;
- pre-melting at least a part of the cullet in the auxiliary melting tank and flowing the pre-melted cullet to the at least one main melting tank ;
- melting the vitrifiable materials in the at least one main melting tank by heating with the electrical heating means, the electrical input fraction of the process ranging from 50% to 85%;
- fining the melt in the fining tank by heating with the oxy-combustion heating means alimented with gas and/or hydrogen;
- flowing the melt from the fining tank to a working zone trough the outlet mean(s);
- capturing $CO_2$ from flue gas having a $CO_2$ concentration higher than 35%, this step comprising step(s) of compression and/or dehydration.

All previously described specific embodiments related to each step of the process of the invention applies to this last very preferred embodiment.

The person skilled in the art realizes that the present invention is by no means limited to the preferred embodiments described above. On the contrary, many modifications and variations are possible within the scope of the appended claims.

The following examples are provided for illustrative purposes, and are not intended to limit the scope of this invention.

**EXAMPLES**

The following examples of processes were computed, considering the same glass pull (750 t/day) and same cullet amount (40% in weight) and considering the following furnace designs:

- **Example 1** (comparative) : conventional combustion glass melting furnace with one tank including melting and refining zones, equipped with burners fed with air/natural gas (NG) (full combustion energy) .
- **Example 2** (comparative) : conventional combustion glass melting furnace with one tank including melting and refining zones, equipped with burners fed with $O_2$/natural gas (NG) (full combustion energy) .
- **Example 3** (comparative) : conventional combustion glass melting furnace with one tank including melting and refining zones, equipped with burners fed with $O_2$/$H_2$ (full combustion energy).
- **Example 4** (comparative) : conventional combustion glass melting furnace with one tank including melting and refining zones, equipped with burners fed with air/natural gas (NG) and with electrodes for electro-boosting. Electrical power of electro-boosting was set at 5 MW.
- **Example 5** (comparative) : conventional combustion glass melting furnace with one tank including melting and refining zones, equipped with burners fed with $O_2$/natural gas (NG) and with electrodes for electro-boosting. Electrical power of electro-boosting was set at 5 MW.
- **Example 6** (comparative) : conventional combustion glass melting furnace with one tank including melting and refining zones, equipped with burners fed with $O_2$/$H_2$ and with electrodes for electro-boosting. Electrical power of electro-boosting was set at 5 MW.
- **Example 7** (invention): segmented furnace equipped with a melting tank comprising electrodes, a fining tank with burners fed with $O_2$/natural gas (NG) and a neck separating the melting and fining tanks. Electrical power in the melting tank was set at 16 MW.
- **Example 8** (invention): segmented furnace equipped with a melting tank comprising electrodes, a fining tank with burners fed with $O_2$/$H_2$ and a neck separating the melting and fining tanks. Electrical power in the melting tank was set at 16 MW.
- **Example 9** (invention): segmented furnace equipped with a melting tank comprising electrodes, a fining tank with burners fed with $O_2$/natural gas (NG):$H_2$ 50:50 and a neck separating the melting and fining tanks. Electrical power in the melting tank was set at 16 MW.
- **Example 10** (invention): segmented furnace equipped with a melting tank comprising electrodes, a fining tank with burners fed with $O_2$/natural gas (NG) and a neck separating the melting and fining tanks. Electrical power in the melting tank was set at 21 MW.
- **Example 11** (invention): segmented furnace equipped with a melting tank comprising electrodes, a fining tank with burners fed with $O_2$/$H_2$ and a neck separating the melting and fining tanks. Electrical power in the melting tank was set at 21 MW.
- **Example 12** (invention): segmented furnace equipped with a melting tank comprising electrodes, a fining tank with burners fed with $O_2$/natural gas (NG):$H_2$ 50:50 and a neck separating the melting and fining tanks. Electrical power in the melting tank was set at 21 MW.

Examples 7-12, according to the invention, include also a step of cullet pre-heating at 450°C, by recovering heat from the flue gas coming from the fining tank, before charging it in the melting tank.

Table 1a shows information related to "Energy". Table 1b shows information related to "Flue gas" and "$CO_2$ capture step".

**Table 1a**

| Example | | Combustible | fuel | Electrical power (MW) | Total power (MW) | Electrical input fraction (%) |
|---|---|---|---|---|---|---|
| | | | | Energy | | |
| **1** | comp. | air | NG | 0 | 47 | 0 |
| **2** | comp. | $O_2$ | NG | 0 | 44 | 0 |
| **3** | comp. | $O_2$ | $H_2$ | 0 | 44 | 0 |
| **4** | comp. | air | NG | 5 | 43 | 0 |

(continued)

| Example | | Energy | | | | |
|---|---|---|---|---|---|---|
| | | Combustible | fuel | Electrical power (MW) | Total power (MW) | Electrical input fraction (%) |
| 5 | comp. | $O_2$ | NG | 5 | 39 | 12.8 |
| 6 | comp. | $O_2$ | $H_2$ | 5 | 39 | 12.8 |
| 7 | inv. | $O_2$ | NG | 14.4 | 28.4 | 50.7 |
| 8 | inv. | $O_2$ | $H_2$ | 14.4 | 28.4 | 50.7 |
| 9 | inv. | $O_2$ | $H_2$/NG 50:50 | 14.4 | 28.4 | 50.7 |
| 10 | inv. | $O_2$ | NG | 19.4 | 24.4 | 79.5 |
| 11 | inv. | $O_2$ | $H_2$ | 19.4 | 24.4 | 79.5 |
| 12 | inv. | $O_2$ | $H_2$/NG 50:50 | 19.4 | 24.4 | 79.5 |

As to "Energy", Table 1a gives the combustible, the fuel, the electrical and total power used in the computations as well as the electrical input fraction (electricity/total energy).

As to "Flue gas", Table 1b gives :

- the flue gas that is extracted to undergo the $CO_2$ capturing step : either the flue gas from the whole furnace ("all", extracted from melting and fining tanks) or from the melting tank only (in case of use of 100% $H_2$ as fuel in segmented furnaces, where no $CO_2$ are then present in flue gas from fining tank);
- the flow rate of the flue gas (wet) that undergoes the $CO_2$ capturing step;
- the $CO_2$ concentration (defined for the dry flue gas, excluding $H_2O$);
- the $H_2O$ concentration.

**Table 1b**

| Example | | Flue gas | | | | tons $CO_2$/y. | $CO_2$ capture | |
|---|---|---|---|---|---|---|---|---|
| | | Flue gas for $CO_2$ capture | flue gas flow rate (Nm$^3$/h, wet) | $CO_2$ conc. (dry, excl.$H_2O$) | $H_2O$ conc. | | Amine abs-des | Dehydr./ compress. |
| 1 | comp. | all | 69742 | 12.9% | 21.0% | 119673 | x | x |
| 2 | comp. | all | 22634 | 63.1% | 53.7% | 113650 | | x |
| 3 | comp. | all | 24005 | 33.7% | 75.8% | 33642 | x | x |
| 4 | comp. | all | 57550 | 13.4% | 20.9% | 102397 | x | x |
| 5 | comp. | all | 19308 | 59.6% | 51.3% | 96375 | | x |
| 6 | comp. | all | 20384 | 34.1% | 71.8% | 33642 | x | x |
| 7 | inv. | all | 12055 | 48.2% | 41.6% | 58368 | | x |
| 8 | inv. | melting | 4081 | 66.2% | 27.6% | 33642 | | x |
| 9 | inv. | all | 12268 | 42.4% | 48.6% | 46005 | | x |
| 10 | inv. | all | 9031 | 41.0% | 32.7% | 42820 | | x |
| 11 | inv. | melting | 4081 | 66.2% | 27.6% | 33642 | | x |
| 12 | inv. | all | 9113 | 38.3% | 38.3% | 38231 | | x |

As to "$CO_2$ capture", Table 1b shows the processes where amine absorption-desorption steps and/or dehydration/compression step(s) are required (marked with "x").

Table 1b shows also the total amount of $CO_2$ (in tons) produced over a year (taking into account the glass pull defined).

Tables 1a and 1b illustrate very well that the process of the invention (examples 7-12) show a lot of advantages, compared to classical furnaces (examples 1-6) without the specific design of the invention and without cullet pre-heating:

- much lower total energy consumption ($\leq$ 30 MW);

- lower amount of $CO_2$ produced over a year;

- lower volumes (or flow rates) of flue gas to be treated with $CO_2$ capture, thereby limiting operational costs and/or investments;

- higher $CO_2$ concentration in treated flue gas (esp. >35%), thereby allowing to avoid an expensive and energy-consuming absorption-desorption step (for ex. with amines) and using essentially simple dehydration/compression step(s);

- lower $H_2O$ concentration (esp. below 50%) in flue gas to be treated with $CO_2$ capture, thereby also limiting operational costs for the dehydration step.

Concerning the amount of $CO_2$ produced over a year for the examples according to the invention (examples 7-12), one reaches low values (< 60000 tons/year and esp. < 40000 tons/year) that allows more easily the captured $CO_2$ to be valorized locally, thereby limiting its transportation (for use or sequestration at distance) that leads to significant additional costs (for the transport itself if by trucks for example, or for investment in pipeline installations).
Contrariwise, comparative examples 1-6 show a very low $CO_2$ concentration in the flue gas (thereby requiring an amine capture), and/or a high total energy consumption (esp. close or higher than 40 MW), and/or high volumes of flue gas to be treated with $CO_2$ capture, and/or high $H_2O$ concentration (esp. above 50%) in flue gas to be treated with $CO_2$ capture, and/or high amount of $CO_2$ produced over a year (esp. close to or higher than 100000 tons).

**Claims**

1. Process for melting vitrifiable materials to produce flat glass, comprising the steps of :

    - providing a furnace comprising (i) at least one melting tank comprising electrical heating means, (ii) a fining tank provided with oxy-combustion heating means, (iii) at least one neck separating the at least one melting tank and the fining tank, (iv) inlet mean(s) located at the at least one melting tank and (v) outlet mean(s) located downstream of the fining tank;
    - charging the vitrifiable materials comprising raw materials and cullet in the at least one melting tank with the inlet mean(s), the amount of cullet being at least 10% in weight of the total amount of vitrifiable materials;
    - cullet pre-heating, at least partially by recovering heat from the furnace, before charging said cullet in the at least one melting tank;
    - melting the vitrifiable materials in the at least one melting tank by heating with the electrical heating means;
    - fining the melt in the fining tank by heating with the oxy-combustion heating means alimented with gas and/or hydrogen;
    - flowing the melt from the fining tank to a working zone trough the outlet mean(s);
    - capturing $CO_2$ from flue gas, said flue gas having a $CO_2$ concentration of at least 35%; **characterized in that** :
    - its electrical input fraction ranges from 50% to 85%;
    - the step of capturing $CO_2$ from flue gas comprises step(s) of compression and/or dehydration.

2. Process for melting vitrifiable materials according to preceding claim, **characterized in that** the amount of cullet is at least 30% in weight of the total amount of vitrifiable materials.

3. Process for melting vitrifiable materials according to preceding claims, **characterized in that** the oxy-combustion heating means are alimented with at least 50% hydrogen and preferably, at least 80% hydrogen.

4. Process for melting vitrifiable materials according to preceding claims, **characterized in that** said flue gas has a $CO_2$ concentration of at least 40%.

5. Process for melting vitrifiable materials according to preceding claim, **characterized in that** said flue gas has a $CO_2$

concentration of at least 50%.

6. Process for melting vitrifiable materials according to preceding claims, **characterized in that** the step of capturing $CO_2$ from flue gas consists essentially in step(s) of compression and/or dehydration.

7. Process for melting vitrifiable materials according to preceding claims, **characterized in that** it comprises further a step of eliminating acidic components from said flue gas.

8. Process for melting vitrifiable materials according to preceding claim, **characterized in that** the step of eliminating acidic components from said flue gas is prior or concurrent to the step of capturing $CO_2$.

9. Process for melting vitrifiable materials according to preceding claims, **characterized in that** the maximum temperature of cullet at the step of cullet pre-heating is 450°C.

10. Process for melting vitrifiable materials according to preceding claims, **characterized in that** it comprises further a step of pre-melting at least a part of the cullet in an auxiliary melting tank and flowing the pre-melted cullet to the at least one melting tank.

11. Process for melting vitrifiable materials according to preceding claims, **characterized in that** the raw materials comprise less than 25% in weight of carbonate compounds.

12. Furnace for carrying out the process of claims 1-11.

**Patentansprüche**

1. Verfahren zum Schmelzen von verglasbaren Materialien zur Herstellung von Flachglas, umfassend die Schritte:

- Bereitstellen eines Ofens, umfassend (i) mindestens einen Schmelztank, der elektrische Heizmittel umfasst, (ii) einen Läutertank, der mit Sauerstoffverbrennungsheizmitteln versehen ist, (iii) mindestens einen Hals, der den mindestens einen Schmelztank und den Läutertank trennt, (iv) ein oder mehrere Einlassmittel, die sich an dem mindestens einen Schmelztank befinden, und (v) ein oder mehrere Auslassmittel, die sich stromabwärts des Läutertanks befinden;
- Eintragen der verglasbaren Materialien, die Rohstoffe und Glasbruch umfassen, in den mindestens einen Schmelztank mit dem Einlassmittel bzw. den Einlassmitteln, wobei die Menge an Glasbruch mindestens 10 Gew.-% der Gesamtmenge von verglasbaren Materialien beträgt;
- Vorheizen des Glasbruchs, zumindest teilweise durch Rückgewinnung von Wärme aus dem Ofen, vor dem Eintragen des Glases in den mindestens einen Schmelztank;
- Schmelzen der verglasbaren Materialien in dem mindestens einen Schmelztank durch Erhitzen mit den elektrischen Heizmitteln;
- Läutern der Schmelze in dem Läutertank durch Erhitzen mit den mit Gas und/oder Wasserstoff gespeisten Sauerstoffverbrennungsheizmitteln;
- Ausfließenlassen der Schmelze aus dem Läutertank in eine Bearbeitungszone durch das Auslassmittel bzw. die Auslassmittel;
- Abfangen von $CO_2$ aus Rauchgas, wobei das Rauchgas eine $CO_2$-Konzentration von mindestens 35 % aufweist; **dadurch gekennzeichnet, dass**:
- sein elektrischer Eingangsanteil zwischen 50 % und 85 % liegt;
- der Schritt des Abfangens von $CO_2$ aus Rauchgas Schritt(e) der Kompression und/oder Dehydratisierung umfasst.

2. Verfahren zum Schmelzen von verglasbaren Materialien nach dem vorhergehenden Anspruch, **dadurch gekennzeichnet, dass** die Menge an Glasbruch mindestens 30 Gew.-% der Gesamtmenge von verglasbaren Materialien beträgt.

3. Verfahren zum Schmelzen von verglasbaren Materialien nach den vorhergehenden Ansprüchen, **dadurch gekennzeichnet, dass** die Sauerstoffverbrennungsheizmittel mit mindestens 50 % Wasserstoff und vorzugsweise mindestens 80 % Wasserstoff gespeist werden.

**4.** Verfahren zum Schmelzen von verglasbaren Materialien nach den vorhergehenden Ansprüchen, **dadurch gekennzeichnet, dass** das Rauchgas eine $CO_2$-Konzentration von mindestens 40 % aufweist.

**5.** Verfahren zum Schmelzen von verglasbaren Materialien nach dem vorhergehenden Anspruch, **dadurch gekennzeichnet, dass** das Rauchgas eine $CO_2$-Konzentration von mindestens 50 % aufweist.

**6.** Verfahren zum Schmelzen von verglasbaren Materialien nach den vorhergehenden Ansprüchen, **dadurch gekennzeichnet, dass** der Schritt des Abfangens von $CO_2$ aus Rauchgas im Wesentlichen aus Schritt(en) der Kompression und/oder Dehydratisierung besteht.

**7.** Verfahren zum Schmelzen von verglasbaren Materialien nach den vorhergehenden Ansprüchen, **dadurch gekennzeichnet, dass** es ferner einen Schritt des Beseitigens von sauren Komponenten aus dem Rauchgas umfasst.

**8.** Verfahren zum Schmelzen von verglasbaren Materialien nach dem vorhergehenden Anspruch, **dadurch gekennzeichnet, dass** der Schritt des Beseitigens von sauren Komponenten aus dem Rauchgas vor oder gleichzeitig mit dem Schritt des Abfangens von $CO_2$ erfolgt.

**9.** Verfahren zum Schmelzen von verglasbaren Materialien nach den vorhergehenden Ansprüchen, **dadurch gekennzeichnet, dass** die Maximaltemperatur von Glasbruch im Schritt des Vorerhitzens von Glasbruch 450 °C beträgt.

**10.** Verfahren zum Schmelzen von verglasbaren Materialien nach den vorhergehenden Ansprüchen, **dadurch gekennzeichnet, dass** es ferner einen Schritt des Vorschmelzens mindestens eines Teils des Glasbruchs in einem Hilfsschmelztank und das Fließenlassen des vorgeschmolzenen Glasbruchs in den mindestens einen Schmelztank umfasst.

**11.** Verfahren zum Schmelzen von verglasbaren Materialien nach den vorhergehenden Ansprüchen, **dadurch gekennzeichnet, dass** die Rohstoffe weniger als 25 Gew.-% Carbonatverbindungen umfassen.

**12.** Ofen zur Durchführung des Verfahrens nach den Ansprüchen 1-11.


**Revendications**

**1.** Procédé pour la fusion de matières vitrifiables pour produire du verre plat, comprenant les étapes de :

- mise à disposition d'un four comprenant (i) au moins une cuve de fusion comprenant des moyens de chauffage électriques, (ii) une cuve d'affinage pourvue de moyens de chauffage par oxycombustion, (iii) au moins un col séparant l'au moins une cuve de fusion et la cuve d'affinage, (iv) un ou plusieurs moyens d'entrée situés au niveau de l'au moins une cuve de fusion et (v) un ou plusieurs moyens de sortie situés en aval de la cuve d'affinage ;
- chargement des matières vitrifiables comprenant des matières premières et du calcin dans l'au moins une cuve de fusion avec le ou les moyens d'entrée, la quantité de calcin étant d'au moins 10 % en poids de la quantité totale de matières vitrifiables ;
- préchauffage de calcin, au moins en partie par récupération de chaleur du four, avant le chargement dudit calcin dans l'au moins une cuve de fusion ;
- fusion des matières vitrifiables dans l'au moins une cuve de fusion par chauffage avec les moyens de chauffage électriques ;
- affinage de la masse fondue dans la cuve d'affinage par chauffage avec les moyens de chauffage par oxycombustion alimentés avec du gaz et/ou de l'hydrogène ;
- écoulement de la masse fondue de la cuve d'affinage vers une zone de travail en passant par le ou les moyens de sortie ;
- capture de $CO_2$ du gaz de combustion, ledit gaz de combustion ayant une concentration en $CO_2$ d'au moins 35 % ;

**caractérisé en ce que** :

- sa fraction d'apport d'énergie électrique va de 50 % à 85 % ;
- l'étape de capture de $CO_2$ du gaz de combustion comprend une ou plusieurs étapes de compression et/ou de déshydratation.

2. Procédé pour la fusion de matières vitrifiables selon la revendication précédente, **caractérisé en ce que** la quantité de calcin est d'au moins 30 % en poids de la quantité totale de matières vitrifiables.

3. Procédé pour la fusion de matières vitrifiables selon les revendications précédentes, **caractérisé en ce que** les moyens de chauffage par oxycombustion sont alimentés avec au moins 50 % d'hydrogène et de préférence, au moins 80 % d'hydrogène.

4. Procédé pour la fusion de matières vitrifiables selon les revendications précédentes, **caractérisé en ce que** ledit gaz de combustion a une concentration en $CO_2$ d'au moins 40 %.

5. Procédé pour la fusion de matières vitrifiables selon la revendication précédente, **caractérisé en ce que** ledit gaz de combustion a une concentration en $CO_2$ d'au moins 50 %.

6. Procédé pour la fusion de matières vitrifiables selon les revendications précédentes, **caractérisé en ce que** l'étape de capture de $CO_2$ du gaz de combustion est constituée essentiellement d'une ou plusieurs étapes de compression et/ou de déshydratation.

7. Procédé pour la fusion de matières vitrifiables selon les revendications précédentes, **caractérisé en ce qu'**il comprend en outre une étape d'élimination de composants acides dudit gaz de combustion.

8. Procédé pour la fusion de matières vitrifiables selon la revendication précédente, **caractérisé en ce que** l'étape d'élimination de composants acides dudit gaz de combustion est avant ou en même temps que l'étape de capture de $CO_2$.

9. Procédé pour la fusion de matières vitrifiables selon les revendications précédentes, **caractérisé en ce que** la température maximale du calcin au niveau de l'étape de préchauffage de calcin est de 450 °C.

10. Procédé pour la fusion de matières vitrifiables selon les revendications précédentes, **caractérisé en ce qu'**il comprend en outre une étape de pré-fusion d'au moins une partie du calcin dans une cuve de fusion auxiliaire et d'écoulement du calcin pré-fondu vers l'au moins une cuve de fusion.

11. Procédé pour la fusion de matières vitrifiables selon les revendications précédentes, **caractérisé en ce que** les matières premières comprennent moins de 25 % en poids de composés carbonates.

12. Four pour la mise en œuvre du procédé selon les revendications 1 à 11.

```
┌─────────────────────────────────┐
│   Providing a specific furnace  │
└─────────────────────────────────┘
                 │
                 ▼
┌─────────────────────────────────┐
│ Cullet pre-heating, at least partially by recovering │
│ heat from the furnace, before charging it in the at  │
│           least one melting tank                     │
└─────────────────────────────────┘
                 │
                 ▼
┌─────────────────────────────────┐
│ Charging the vitrifiable materials (with at least │
│ 10wt% cullet) in the at least one melting tank    │
│              with inlet mean(s)                   │
└─────────────────────────────────┘
                 │
                 ▼
┌─────────────────────────────────┐          ┌──────────────────────────┐
│ Melting the vitrifiable materials in the at least │ ---▶ │ capturing CO₂ with step(s) │
│ one  melting tank by heating with the electrical  │      │ of compression and/or     │
│               heating means                       │      │ dehydration, from a flue  │
└─────────────────────────────────┘          │ gas coming from the at    │
                 │                            │ least one melting tank    │
                 ▼                            │ and/or from the fining tank │
┌─────────────────────────────────┐   ---▶   │                          │
│ Fining the melt in the fining tank by heating with │      └──────────────────────────┘
│ the oxy-combustion heating means alimented         │
│          with gas and/or hydrogen                  │
└─────────────────────────────────┘
                 │
                 ▼
┌─────────────────────────────────┐
│ Flowing the melt from the fining tank to a │
│ working zone trough the outlet mean(s)     │
└─────────────────────────────────┘
```

FIG.1

**EP 4 440 998 B1**

**REFERENCES CITED IN THE DESCRIPTION**

**Patent documents cited in the description**

- EP 21200998
- US 2020331789 A1
- EP 0761287 A2
- US 2014230491 A1
- US 5526580 A
- DE 3716687
- EP 2137115 A1